# FASCICULE DE BREVET EUROPEEN

(11) **EP 4 141 579 B1**
(45) Date de publication et mention de la délivrance du brevet: **18.06.2025**
(21) Numéro de dépôt: 21193818.8
(22) Date de dépôt: 30.08.2021
(51) Int. Cl.: G04B 13/02, F16H 49/00, H02K 49/10

(54) **MÉCANISME HORLOGER MUNI D'UN ENGRENAGE MAGNÉTIQUE**
UHRWERKSMECHANISMUS MIT EINEM MAGNETISCHEN GETRIEBERAD
TIMEPIECE MECHANISM PROVIDED WITH A MAGNETIC GEAR

(43) Date de publication de la demande: 01.03.2023
(73) Titulaire: The Swatch Group Research and Development Ltd, 2074 Marin (CH)
(72) Inventeur: IMBODEN, Matthias, 2072 St-Blaise (CH); MIGNOT, Jean-Pierre, 25300 Pontarlier (FR); CALIC, Milan, 1093 La Conversion (CH); NICOLAS, Cédric, 2000 Neuchâtel (CH); BORN, Jean-Jacques, 1110 Morges (CH)
(74) Mandataire: ICB SA

(56) Documents cités:
- FR-A- 1 584 453
- US-A- 3 400 287
- US-A- 5 633 555

## Description

### Domaine technique de l'invention

L'invention concerne le domaine des engrenages magnétiques formés d'une première roue et d'une deuxième roue en relation d'engrènement magnétique.

En particulier, l'invention concerne un mécanisme, du type horloger, incorporant un tel engrenage magnétique.

### Arrière-plan technologique

Les engrenages magnétiques sont des dispositifs connus qui peuvent être utilisés pour transférer un couple mécanique entre deux pièces sans aucun contact direct entre les pièces, et donc sans provoquer d'usure ou de friction entre ces pièces. De tels engrenages procurent les avantages suivants :
- aucune huile ou lubrifiant n'est nécessaire car il n'y a pas d'usure mécanique sur les dents des pièces ;
- les pièces dentées peuvent interagir et transférer le couple et la puissance mécanique même si elles sont séparées hermétiquement ; et
- les pièces dentées peuvent être utilisées pour limiter le couple maximal, et peuvent ainsi aider à éviter des dommages par exemple lors d'un choc mécanique.

Un tel engrenage magnétique comporte typiquement deux roues en relation d'engrènement magnétique. Une première roue est munie de premiers pôles magnétiques permanents, qui sont typiquement alternés et agencés circulairement et définissent une première denture magnétique. Ces premiers pôles magnétiques sont par exemple définis par des aimants bipolaires ayant une aimantation radiale et alternée. Une deuxième roue est munie de dents en matériau ferromagnétique ou de deuxièmes pôles magnétiques, ces dents ou deuxièmes pôles magnétiques étant agencés circulairement et définissant une deuxième denture magnétique. Les première et deuxième roues sont typiquement situées dans un même plan général. Le couplage magnétique entre les dentures des première et deuxième roues fait que lorsqu'une des première et deuxième roues est entraînée en rotation, l'autre roue est également entraînée en rotation grâce à un engrènement magnétique.

Toutefois, un inconvénient de ce type d'engrenage magnétique est qu'il nécessite d'aimanter (par aimantation permanente) chaque dent de la première roue, typiquement selon un motif alterné. Cela a deux conséquences importantes : d'une part un tel engrenage magnétique est coûteux à fabriquer ; et d'autre part, même si la quantité d'interaction requise entre les deux roues est relativement faible, les aimants rotatifs vont engendrer des lignes de champ magnétique importantes à travers le système contenant l'engrenage magnétique (typiquement un mécanisme horloger). Or, il est très difficile de contenir de telles lignes de champ magnétique afin de protéger les autres composants du système de l'effet induit par ces lignes de champ. Un tel effet peut être préjudiciable au bon fonctionnement du système, notamment lorsque ce dernier est un mouvement de mécanisme horloger.

Le document FR 1.584.453 concerne un échappement magnétique horloger. Dans un mode de réalisation, la roue d'échappement présente une denture ferromagnétique et le balancier est muni d'un aimant bipolaire. Un couplage magnétique est prévu entre l'aimant bipolaire et la denture ferromagnétique. Un aimant fixe maintient momentanément la roue d'échappement dans des positions angulaires données et un écran magnétique partiel est prévu entre l'aimant bipolaire et la denture magnétique pour que le mouvement oscillatoire du balancier soit transformé en un mouvement de rotation unidirectionnel de la roue d'échappement. Dans un autre mode de réalisation, le balancier est muni d'une dent à haute perméabilité magnétique et le couplage magnétique à la roue d'échappement est réalisé via un petit circuit magnétique fixe et comportant un aimant bipolaire.

### Résumé de l'invention

L'invention a donc pour objectif de pallier les inconvénients de l'art antérieur en procurant un mécanisme, notamment du type horloger, comprenant un engrenage magnétique qui soit simple et peu coûteux à fabriquer, et qui permette de réduire le nombre de pôles magnétiques permanents nécessaires à l'engrenage magnétique tout en permettant de contenir les lignes de champ magnétique afin de protéger les différents autres composants d'un système contenant le mécanisme.

A cet effet, la présente invention concerne un mécanisme, notamment du type horloger, comprenant un engrenage magnétique comportant une première roue et une deuxième roue munies respectivement d'une première denture magnétique et d'une deuxième denture magnétique. Selon l'invention, les première et deuxième dentures magnétiques sont respectivement formées par des premières et deuxièmes dents en matériau ferromagnétique doux ; et l'engrenage magnétique comprend en outre une troisième roue agencée entre les première et deuxième roues et munie de premiers pôles magnétiques permanents formant les dents aimantées d'une troisième denture magnétique que comporte cette troisième roue et qui est configurée de manière que des premiers flux magnétiques, ayant des polarités alternées, sortent respectivement de ces dents aimantées. La troisième roue et la première roue sont agencées de manière que la troisième denture magnétique présente un premier couplage magnétique avec la première denture magnétique généré par lesdits premiers flux magnétiques qui polarisent momentanément, en attraction magnétique, des dents de la première denture magnétique, momentanément situées dans une première zone de couplage magnétique avec la troisième denture magnétique et alors traversées respectivement par des premiers flux magnétiques parmi lesdits premiers flux magnétiques. La troisième roue et la deuxième roue sont agencées de manière que la troisième denture magnétique ou, le cas échéant, une quatrième denture magnétique, que comporte la troisième roue et qui est formée par des deuxièmes pôles magnétiques permanents desquels sortent des deuxièmes flux magnétiques avec des polarités alternées, présente un deuxième couplage magnétique avec la deuxième denture magnétique qui est généré par lesdits premiers flux magnétiques, respectivement par lesdits deuxièmes flux magnétiques qui polarisent momentanément, en attraction magnétique, des dents de la deuxième denture magnétique qui sont momentanément situées dans une deuxième zone de couplage magnétique avec la troisième denture magnétique (8) ou, le cas échéant, avec la quatrième denture magnétique et alors traversées par des premiers flux magnétiques parmi les premiers flux magnétiques, respectivement par des deuxièmes flux magnétiques parmi les deuxièmes flux magnétiques. Le matériau ferromagnétique doux est de préférence un matériau à haute perméabilité magnétique, donc à faible reluctance magnétique.

Un tel mécanisme à engrenage magnétique, ainsi configuré, produit une aimantation locale et temporaire uniquement sur les dents en matériau ferromagnétique doux de la première denture et de la deuxième denture qui sont situées dans une zone de couplage magnétique respective et qui sont actives à un instant donné. Le nombre de pôles magnétiques permanents de la troisième roue qui sont nécessaires pour générer une telle aimantation locale est par conséquent substantiellement réduit. Ceci permet de réduire les coûts et de simplifier la fabrication du mécanisme, ainsi que de contenir localement les lignes de champ magnétique à proximité de l'endroit où le transfert de couple se produit entre les première et deuxième roues. La présence de dents en matériau ferromagnétique doux sur les première et deuxième roues permet en outre de refermer les lignes du champ magnétique produit par les pôles magnétiques permanents de la troisième roue. Les différents composants d'un système contenant le mécanisme, tel que par exemple un mouvement d'une pièce d'horlogerie, sont ainsi avantageusement protégés du champ magnétique produit.

En outre, un tel mécanisme selon l'invention procure une limitation intrinsèque du couple maximal transmis entre les première et deuxième roues, permettant ainsi de protéger l'engrenage des dommages produits par un choc mécanique.

De préférence, la troisième denture magnétique comporte au moins quatre dents aimantées, notamment entre quatre et dix dents aimantées, y compris. De même, lorsqu'elle est prévue dans des modes de réalisation, la quatrième denture magnétique comporte au moins quatre dents aimantées, notamment entre quatre et dix dents aimantées, y compris.

Selon un mode de réalisation préférentiel de l'invention, la troisième roue est montée libre en rotation, cette troisième roue étant configurée pour transmettre un couple de force reçu de la première roue, laquelle est une roue entraîneuse dans l'engrenage magnétique, à la deuxième roue qui est entraînée par la première roue via la troisième roue de manière à effectuer une fonction du mécanisme ou à transmettre dans le mécanisme un couple de force reçu de la première roue. Le couplage magnétique entre les première et deuxième roues est ainsi un couplage indirect, via les premiers et deuxièmes couplages magnétiques (couplages intermédiaires) entre, d'une part, la première roue et la troisième roue et, d'autre part, entre la deuxième roue et la troisième roue.

La première denture magnétique comprend N1 dents, la deuxième denture magnétique comprend N2 dents, et la troisième denture magnétique comprend N3 dents. Avantageusement, le nombre N3 est un nombre pair entre quatre et dix, y compris ; et le rapport entre le nombre N1 et le nombre N3 et le rapport entre le nombre N2 et le nombre N3 sont chacun supérieurs ou égaux à deux, de préférence supérieurs ou égaux à trois. Ceci permet d'améliorer l'efficacité du couplage magnétique entre les première, deuxième et troisième roues pour un nombre limité d'aimants.

Lorsqu'une quatrième denture magnétique est prévue dans certains modes de réalisation, cette quatrième denture magnétique comprend N4 dents. Dans une variante avantageuse, le nombre N4 est égal au nombre N3. Cependant, le nombre N4 peut être prévu différent du nombre N3. Dans un mode de réalisation avantageux dans laquelle intervient la quatrième denture, les dents aimantées de la troisième denture magnétique sont formées par des premiers pôles magnétiques d'une pluralité d'aimants bipolaires alors que les dents aimantées de la quatrième denture magnétique sont formées par des deuxièmes pôles magnétiques de cette pluralité d'aimants bipolaires, ces deuxièmes pôles magnétiques étant spatialement distincts des premiers pôles magnétiques. En particulier, la troisième roue comprend N aimants bipolaires et le nombre N est égal au nombre N3 et au nombre N4 (N = N3 = N4). A noter que N aimants bipolaires présentent par définition 2N pôles magnétiques.

Selon un mode de réalisation de l'invention particulier, la troisième roue comporte ladite quatrième denture magnétique, les première et deuxième roues s'étendent dans des plans sensiblement perpendiculaires. La troisième roue s'étend dans un plan disposé à sensiblement 45 degrés (45°) par rapport au plan dans lequel s'étend la première roue et au plan dans lequel s'étend la deuxième roue. Chacun desdits premiers pôles magnétiques permanents forme avec un deuxième pôle magnétique permanent parmi lesdits deuxièmes pôles magnétiques permanents un aimant bipolaire présentant une aimantation axiale. Les première, deuxième et troisième roues sont positionnées de sorte que le ou les aimants bipolaires couplés à la première denture magnétique sont simultanément couplés à la deuxième denture magnétique.

Dans une variante générale, chacune des première et deuxième roues comporte au moins six dents qui s'étendent radialement par rapport à l'axe de rotation de la roue concernée. Chaque dent prend la forme d'une protrusion qui s'étend en saillie par rapport à un pourtour annulaire de la roue. En particulier, chacune des première et deuxième roues comporte entre six et trente dents qui s'étendent radialement par rapport à l'axe de la roue.

Lorsque la pluralité d'aimants bipolaires présentent chacun une polarisation radiale, la troisième roue présente avantageusement une partie centrale en matériau ferromagnétique, en périphérie de laquelle sont agencés la pluralité d'aimants bipolaires et dont les pôles magnétiques extérieurs définissent respectivement les dents aimantées de la troisième denture magnétique. Ceci permet de refermer efficacement, du côté des pôles magnétiques intérieurs de la pluralité d'aimants bipolaires, les lignes des champs magnétiques, notamment entre aimants bipolaires adjacents, via la partie centrale de la troisième roue.

Avantageusement, la première roue et/ou la deuxième roue comprennent/comprend une jante formant une base circulaire continue pour la denture magnétique respective, cette jante étant constituée d'un matériau ferromagnétique doux de sorte à former une fermeture pour des chemins magnétiques des flux magnétiques.

Dans une variante particulière, le mécanisme comporte en outre un dispositif anti-retour couplé mécaniquement à la deuxième roue. Ceci permet d'empêcher un glissement inverse des roues, qui peut notamment se produire en cas de couple de rappel élevé comme par exemple lors de l'enroulement d'un ressort moteur. Un tel glissement peut en effet provoquer un effet d'emballement préjudiciable au mécanisme, au cours duquel la deuxième roue vient à tourner librement dans la direction opposée à celle du transfert de couple souhaité. Un tel effet d'emballement, dû au glissement inverse des roues, peut par exemple être initié par une vibration, un choc, ou tout autre perturbation mécanique au sein du mécanisme en question (enroulement d'un ressort par exemple).

Selon un exemple de réalisation de l'invention, au moins les première et deuxième roues sont coplanaires. En particulier, les première, deuxième et troisième roues peuvent être coplanaires. Dans ce dernier cas, la troisième roue est formée notamment par une pluralité d'aimants bipolaires présentant une aimantation / polarisation radiale. Selon un autre exemple de réalisation de l'invention, au moins les première et deuxième roues s'étendent dans des plans distincts. En particulier, les première, deuxième et troisième roues peuvent s'étendre chacune dans un plan distinct.

### Brève description des figures

Les buts, avantages et caractéristiques du mécanisme selon l'invention apparaîtront mieux dans la description suivante de diverses formes d'exécution non limitatives illustrées par les dessins dans lesquels :
- la figure 1 est une vue de dessus d'un mécanisme incorporant un engrenage magnétique selon l'invention, selon un premier exemple d'un premier mode de réalisation du mécanisme de l'invention ;
- la figure 2 est une vue analogue à celle de la figure 1, selon un deuxième exemple du premier mode de réalisation du mécanisme de l'invention ;
- la figure 3 est une vue de côté, en perspective, d'un deuxième mode de réalisation du mécanisme de l'invention ;
- la figure 4 est une vue de dessus et en perspective, observée selon la ligne de vue A1, du mécanisme de la figure 3 ; et
- la figure 5 est une vue agrandie en perspective montrant un détail de réalisation du mécanisme de la figure 3.

### Description détaillée de l'invention

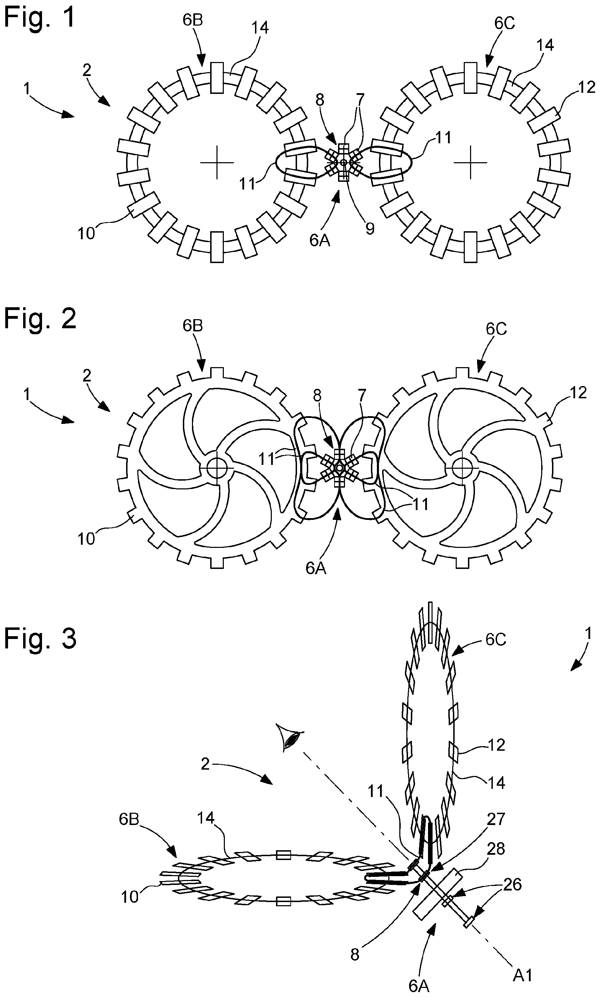

Comme illustré sur les figures 1 à 5, la présente invention procède de l'idée générale inventive qui consiste à prévoir, dans un engrenage magnétique 2 équipant un mécanisme 1, notamment du type horloger, deux roues 6B, 6C munies chacune de dents en matériau ferromagnétique doux à relativement haute perméabilité magnétique, ces deux roues 6B, 6C étant couplées magnétiquement à une troisième roue 6A, de plus petit diamètre et en particulier ayant des dimensions propres à un pignon, munie de pôles magnétiques permanents qui sont agencés circulairement autour de son axe de rotation. Cette troisième roue 6A, qui est agencée entre les première et deuxième roues 6B, 6C, produit un champ magnétique couplé à deux parties respectives de ces roues 6B, 6C situées chacune dans une zone de couplage magnétique respective avec la troisième roue 6A. Les première et deuxième roues 6B, 6C sont alors chacune en relation d'engrènement magnétique avec la troisième roue 6A qui est une roue intermédiaire, de plus petit diamètre, entre les première et deuxième roues, cette roue intermédiaire générant des flux magnétiques permettant de polariser/d'aimanter localement les première et deuxième dentures et de coupler magnétiquement, de manière indirecte, ces première et deuxième roues entre elles.

Le champ magnétique généré par la troisième roue 6A produit donc une aimantation locale sur chacune des première et deuxième roues 6B, 6C, plus précisément sur des dentures en matériau ferromagnétique doux de ces roues 6B, 6C, les dents de ces dentures étant successivement et temporairement aimantées / polarisées, notamment par groupes de dents actives à un instant donné, c'est-à-dire se trouvant momentanément dans une zone d'engrènement magnétique avec la troisième roue 6A. Le nombre de pôles magnétiques permanents de la troisième roue 6A, qui sont nécessaires pour générer une telle aimantation locale et temporaire des première et deuxième dentures, est par conséquent substantiellement réduit. Lorsqu'une des deux roues 6B, 6C ou la troisième roue 6A est entraînée en rotation, les autres deux roues sont aussi entraînées en rotation grâce aux couplages magnétiques, en attraction, entre des dents de ces trois roues 6A, 6B, 6C dans deux zones d'engrènement magnétique prévues pour ces trois roues 6A, 6B, 6C. Les lignes 11 du champ magnétique produit par les couplages magnétiques entre les trois roues 6A, 6B, 6C sont alors contenues localement à proximité de l'endroit où le transfert de couple se produit.

Le mécanisme 1 peut également comporter un dispositif anti-retour (non représenté sur les figures) couplé mécaniquement à la deuxième roue 6C. Le dispositif anti-retour comporte par exemple une roue à rochet et un cliquet. La roue à rochet est solidaire en rotation de la deuxième roue 6C, et est munie de dents qui s'étendent radialement par rapport à l'axe de rotation de la roue à rochet. Le cliquet coopère avec les dents de la roue à rochets de manière à empêcher toute rotation de la deuxième roue 6C dans la direction opposée à la direction correspondant au transfert de couple souhaité. Ceci permet d'empêcher que la deuxième roue 6C vienne à tourner librement dans cette direction de rotation en cas de vibration, choc, ou toute autre perturbation mécanique au sein du mécanisme horloger (enroulement d'un ressort par exemple), ce qui pourrait être préjudiciable à l'intégrité mécanique de ce dernier.

Dans la suite de la description, les éléments désignés par des mêmes références numériques sont analogues.

En référence aux figures 1 et 2, on décrira ci-après un premier mode de réalisation du mécanisme 1 comprenant un engrenage magnétique 2 selon l'invention. Selon ce premier mode de réalisation du mécanisme 1, les première, deuxième et troisième roues 6B, 6C, 6A s'étendent dans un même plan général. La troisième roue 6A est montée libre en rotation. La troisième roue 6A est ainsi configurée pour transmettre à la deuxième roue 6C un couple de force reçu de la première roue 6B. La première roue 6B est alors une roue entraîneuse dans l'engrenage magnétique 2, et la deuxième roue 6C est entraînée par la première roue 6B via la troisième roue 6A de manière à effectuer une fonction du mécanisme 1 ou à transmettre dans ce mécanisme 1 un couple de force reçu de la première roue 6B. La première roue 6B est munie de N1 dents en matériau ferromagnétique doux définissant une première denture magnétique 10. La deuxième roue 6C est munie de N2 dents en matériau ferromagnétique doux définissant une deuxième denture magnétique 12. Les dents des première et deuxième roues 6B, 6C sont constituées d'un matériau ferromagnétique doux, de préférence à haute perméabilité magnétique, tel que par exemple Mu-métal. La troisième roue 6A, plus petite en diamètre que les deux autres roues 6B, 6C, est munie de N3 pôles magnétiques permanents extérieurs 7, définis par autant d'aimants bipolaires ayant une polarisation radiale, qui sont agencés circulairement et forment les dents aimantées d'une troisième denture magnétique 8.

La première denture magnétique 10 présente un premier couplage magnétique direct avec la troisième denture magnétique 8 de sorte que, lorsqu'une des première et troisième roues 6B, 6A est entraînée en rotation, l'autre roue 6B, 6A est également entraînée en rotation, avec un rapport de transmission défini par les première et troisième dentures 10, 8, par le premier couplage magnétique direct entre ces première et troisième dentures 10, 8. Ce premier couplage magnétique direct est généré par des flux magnétiques de la troisième denture 8 qui polarisent momentanément, en attraction magnétique, des dents de la première denture magnétique 10 qui sont momentanément situées dans une première zone de couplage magnétique avec la troisième denture magnétique 8 et alors traversées respectivement par ces flux magnétiques.

La deuxième denture magnétique 12 présente un deuxième couplage magnétique direct avec la troisième denture magnétique 8 de sorte que, lorsqu'une des deuxième et troisième roues 6C, 6A est entraînée en rotation, l'autre roue 6C, 6A est également entraînée en rotation, avec un rapport de transmission défini par les deuxième et troisième dentures, par le deuxième couplage magnétique direct entre ces deuxième et troisième dentures 12, 8. Ce deuxième couplage magnétique direct est généré par des flux magnétiques de la troisième denture 8 qui polarisent momentanément, en attraction magnétique, des dents de la deuxième denture magnétique 12 qui sont momentanément situées dans une deuxième zone de couplage magnétique avec la troisième denture magnétique 8 et alors traversées respectivement par ces flux magnétiques. Le couplage magnétique entre les première et deuxième roues 6B, 6C est ainsi un couplage indirect, via les premiers et deuxièmes couplages magnétiques directs entre, d'une part, la première roue 6B et la troisième roue 6A et, d'autre part, entre la deuxième roue 6C et la troisième roue 6A.

Les N3 pôles magnétiques permanents 7 de la troisième roue 6A forment les dents aimantées de la troisième denture magnétique 8 desquelles sortent respectivement des flux magnétiques ayant des polarités alternées. Comme les pôles magnétiques 7 sont agencés de manière circulaire avec une polarisation alternée, leur nombre est un nombre pair. De préférence, le nombre N3 est un nombre pair entre quatre et dix, y compris. Les pôles magnétiques 7 sont typiquement agencés par paires avec respectivement autant de pôles magnétiques complémentaires, autour d'une partie centrale 9 formant axe de la troisième roue 6A ou dans une ouverture de laquelle passe un tel axe, et forment ainsi ensemble une pluralité d'aimants bipolaires. Dans le cas où la pluralité d'aimants bipolaires présentent une polarisation radiale, la partie centrale 9 est avantageusement constituée d'un matériau ferromagnétique ou d'un matériau en mu-métal. Un tel matériau permet de refermer efficacement les lignes des champs magnétiques sortant des pôles magnétiques intérieurs de la pluralité d'aimants bipolaires, notamment entre aimants bipolaires adjacents, via la partie centrale de la troisième roue 6A.

Le nombre N1 de dents de la première roue 6B est de préférence supérieur au nombre N3 de pôles magnétiques 7 de la troisième roue 6A. Le rapport entre le nombre N1 de dents de la première roue 6B et le nombre N3 de pôles magnétiques 7 de la troisième roue 6A est avantageusement supérieur ou égal à deux, de préférence supérieur ou égal à trois. Le nombre N2 de dents de la deuxième roue 6C est de préférence supérieur au nombre N3 de pôles magnétiques 7 de la troisième roue 6A. Le rapport entre le nombre N2 de dents de la deuxième roue 6C et le nombre N3 de pôles magnétiques 7 de la troisième roue 6A est avantageusement supérieur ou égal à deux, de préférence supérieur ou égal à trois. De préférence, chacune des première, deuxième et troisième roues 6B, 6C, 6A est montée sur un axe pivoté dans un palier.

Selon un premier exemple de réalisation du premier mode de réalisation du mécanisme 1, illustré à la figure 1, les première et deuxième roues 6B, 6C comprennent chacune dix-huit dents en matériau ferromagnétique doux. Chaque dent de la première roue 6B et de la deuxième roue 6C est montée sur une jante 14 respective en matériau non magnétique, avec des zones non magnétiques entre les dents de la première denture 10 et des zones non magnétiques entre les dents de la deuxième denture 12. La troisième roue 6A comprend six aimants bipolaires 7 présentant une aimantation radiale et formant respectivement les dents aimantées de la troisième denture magnétique 8. Plus particulièrement, les pôles magnétiques extérieurs de la pluralité d'aimants bipolaires définissent les dents aimantées de la troisième denture magnétique.

Selon un deuxième exemple de réalisation du premier mode de réalisation du mécanisme 1, illustré à la figure 2, la première roue 6B, respectivement la deuxième roue 6C, comprend une jante annulaire en matériau magnétique, typiquement en matériau ferromagnétique doux, définissant à son pourtour extérieur dix-huit dents également en matériau ferromagnétique doux formant la première denture magnétique 10, respectivement la deuxième denture magnétique 12. Une telle jante annulaire forme une base circulaire continue, pour chacune des première et deuxième dentures magnétiques 10, 12, par laquelle se referment les chemins magnétiques des flux magnétiques d'interaction. La troisième roue 6A comprend six aimants bipolaires présentant une polarisation / aimantation radiale et formant respectivement les six dents aimantées de la troisième denture magnétique 8.

Dans ces deux premiers exemples du premier mode de réalisation illustrés sur les figures 1 et 2, les première, deuxième et troisième roues 6B, 6C, 6A s'étendent de manière colinéaire dans un même plan général. Alternativement, les première, deuxième et troisième roues 6B, 6C, 6A peuvent s'étendre dans un même plan général sans être colinéaires.

En référence aux figures 3 à 5, on décrira ci-après un deuxième mode de réalisation du mécanisme 1 comprenant un engrenage magnétique 2 selon l'invention. Selon ce deuxième mode de réalisation du mécanisme 1, les première, deuxième et troisième roues 6B, 6C, 6A s'étendent chacune dans un plan distinct. Dans l'exemple de réalisation particulier illustré sur les figures 3 à 5, et sans que cela ne soit limitatif pour ce deuxième mode de réalisation, les première et deuxième roues 6B, 6C s'étendent dans des plans sensiblement perpendiculaires. La troisième roue 6A s'étend dans un plan disposé à sensiblement 45 degrés par rapport au plan dans lequel s'étend la première roue 6B et au plan dans lequel s'étend la deuxième roue 6C. La troisième roue 6A comprend six aimants bipolaires 26 définissant une troisième denture magnétique 8 et une quatrième denture magnétique 27. La troisième denture magnétique 8 est formée par une pluralité de premiers pôles magnétiques permanents 29 situés, relativement à un plan médian de la pluralité d'aimants bipolaires 26, du côté de la première denture magnétique 10 de la première roue 6B. La quatrième denture magnétique 27 est définie par une pluralité de deuxièmes pôles magnétiques permanents 31 situés, relativement au plan médian de la pluralité d'aimants bipolaires 26, du côté de la deuxième denture magnétique 12 de la deuxième roue 6C. Chaque premier pôle magnétique permanent 29 et le deuxième pôle magnétique permanent 31 correspondant forment ensemble un des aimants bipolaires.

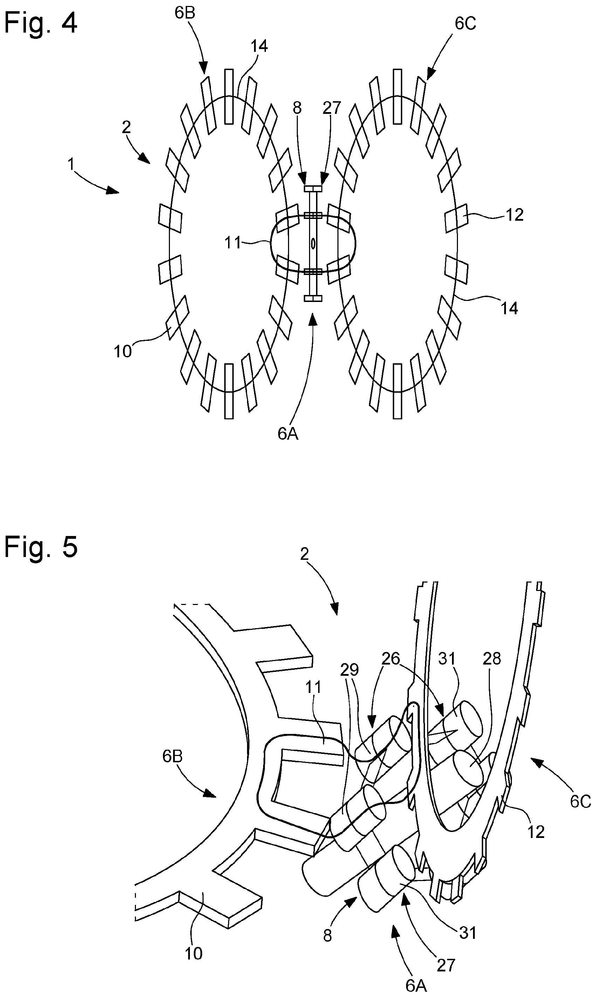

Comme visible sur la figure 5, les première et deuxième roues 6B, 6C comprennent un même nombre de dents en matériau ferromagnétique. Ces deux roues 6B et 6C sont du type représenté à la figure 2. Les six aimants bipolaires 26 de la troisième roue 6A présentent chacun une aimantation le long d'un axe parallèle à l'axe de rotation 28 de la troisième roue. Les dents aimantées 29, 31 de la troisième denture 8 et de la quatrième denture 27 sont donc agencées de manière que les flux magnétiques sortent de ces dents aimantées avec une direction principale sensiblement parallèle à l'axe de rotation 28 de la troisième roue 6A.

Dans un mode de réalisation particulier (non représenté sur les figures), les trois roues sont situées dans trois plans distincts qui sont parallèles, la troisième roue étant située avantageusement dans un plan intermédiaire. Dans cet exemple avantageux, la troisième roue comporte une pluralité d'aimants bipolaires ayant une polarisation / aimantation axiale, la troisième denture magnétique de la troisième roue étant définie par une pluralité de premiers pôles magnétiques permanents formant respectivement la pluralité d'aimants bipolaires et situés, relativement à un plan médian de la pluralité d'aimants bipolaires, du côté de la première denture magnétique de la première roue, les premiers pôles magnétiques permanents étant au moins partiellement superposés à cette première denture magnétique. La troisième roue comprend en outre une quatrième denture magnétique définie par une pluralité de deuxièmes pôles magnétiques permanents formant respectivement la pluralité d'aimants bipolaires et situés du côté de la deuxième denture magnétique de la deuxième roue, les deuxièmes pôles magnétiques permanents étant au moins partiellement superposés à cette deuxième denture magnétique. Ainsi, le nombre de dents aimantées de la troisième denture magnétique et le nombre de dents aimantées de la quatrième denture magnétique sont égaux et égal au nombre d'aimants bipolaires que porte la troisième roue.

Selon une autre variante de réalisation particulière (non représentée sur les figures), les première et deuxième roues 6B, 6C s'étendent dans un même premier plan, et la troisième roue 6A s'étend dans un deuxième plan distinct du premier plan et parallèle à ce dernier. Dans ce cas, la troisième roue porte avantageusement une pluralité d'aimants bipolaires présentant une polarisation axiale, lesquels sont couverts, du côté opposé au premier plan, par une plaque en matériau ferromagnétique doux qui ferme les chemins des flux magnétiques de cette pluralité d'aimants bipolaires du côté opposé au premier plan.

## Revendications

1. Mécanisme (1), du type horloger, comprenant un engrenage magnétique (2) comportant une première roue (6B) et une deuxième roue (6C) munies respectivement d'une première denture magnétique (10) et d'une deuxième denture magnétique (12) ; où les première et deuxième dentures magnétiques (10, 12) sont respectivement formées par des premières et deuxièmes dents en matériau ferromagnétique doux ; et en ce que l'engrenage magnétique (2) comprend en outre une troisième roue (6A) agencée entre les première et deuxième roues (6B, 6C) et munie de premiers pôles magnétiques permanents (7 ; 29) formant les dents aimantées d'une troisième denture magnétique (8) que comporte cette troisième roue (6A) et qui est configurée de manière que des premiers flux magnétiques, ayant des polarités alternées, sortent respectivement de ces dents aimantées, la troisième roue (6A) et la première roue (6B) étant agencées de manière que la troisième denture magnétique (8) présente un premier couplage magnétique avec la première denture magnétique (10) généré par lesdits premiers flux magnétiques qui polarisent momentanément, en attraction magnétique, des dents de la première denture magnétique (10), momentanément situées dans une première zone de couplage magnétique avec la troisième denture magnétique (8) et alors traversées respectivement par des premiers flux magnétiques parmi lesdits premiers flux magnétiques, la troisième roue (6A) et la deuxième roue (6C) étant agencées de manière que la troisième denture magnétique (8) ou, le cas échéant, une quatrième denture magnétique (27), que comporte la troisième roue et qui est formée par des deuxièmes pôles magnétiques permanents (31) desquels sortent des deuxièmes flux magnétiques avec des polarités alternées, présente un deuxième couplage magnétique avec la deuxième denture magnétique (12) qui est généré par lesdits premiers flux magnétiques, respectivement par lesdits deuxièmes flux magnétiques qui polarisent momentanément, en attraction magnétique, des dents de la deuxième denture magnétique (12) qui sont momentanément situées dans une deuxième zone de couplage magnétique avec la troisième denture magnétique (8) ou, le cas échéant, avec la quatrième denture magnétique (27) et alors traversées par des premiers flux magnétiques parmi lesdits premiers flux magnétiques, respectivement par des deuxièmes flux magnétiques parmi lesdits deuxièmes flux magnétiques.

2. Mécanisme (1) selon la revendication 1, **caractérisé en ce que** la troisième roue (6A) est montée libre en rotation, cette troisième roue (6A) étant configurée pour transmettre un couple de force reçu de la première roue (6B), laquelle est une roue entraîneuse dans l'engrenage magnétique (2), à la deuxième roue (6C) qui est entraînée par la première roue (6B) via la troisième roue (6A) de manière à effectuer une fonction du mécanisme ou à transmettre dans le mécanisme (1) un couple de force reçu de la première roue (6B).

3. Mécanisme (1) selon la revendication 1 ou 2, dans lequel la première denture magnétique (10) comprend N1 dents, la deuxième denture magnétique (12) comprend N2 dents, et la troisième denture magnétique (8) comprend N3 dents ; **caractérisé en ce que** le nombre N3 est un nombre pair entre quatre et dix, y compris ; et **en ce que** le rapport entre le nombre N1 et le nombre N3 et le rapport entre le nombre N2 et le nombre N3 sont chacun supérieurs ou égaux à deux, de préférence supérieurs ou égaux à trois.

4. Mécanisme (1) selon l'une quelconque des revendications précédentes, **caractérisé en ce que** la troisième roue (6A) présente une partie centrale (9 ; 28) en matériau ferromagnétique, en périphérie de laquelle sont agencés ses dits pôles magnétiques permanents (7) par paires avec respectivement autant de pôles magnétiques complémentaires, formant ainsi des aimants bipolaires présentant une aimantation radiale et définissant respectivement les dents aimantées de la troisième denture magnétique.

5. Mécanisme (1) selon l'une quelconque des revendications précédentes, **caractérisé en ce que** la première roue et/ou la deuxième roue (6B, 6C) comprennent / comprend une jante formant une base circulaire continue pour la denture magnétique respective (10, 12), cette jante étant constituée d'un matériau ferromagnétique doux de sorte à former une fermeture pour des chemins magnétiques desdits flux magnétiques.

6. Mécanisme (1) selon l'une quelconque des revendications précédentes, **caractérisé en ce qu'**il comporte en outre un dispositif anti-retour (20) couplé mécaniquement à la deuxième roue (6C).

7. Mécanisme (1) selon l'une quelconque des revendications précédentes, **caractérisé en ce qu'**au moins les première et deuxième roues (6B, 6C) sont coplanaires.

8. Mécanisme (1) selon la revendication 7, **caractérisé en ce que** les première, deuxième et troisième roues (6B, 6C, 6A) sont coplanaires.

9. Mécanisme (1) selon l'une quelconque des revendications 1 à 6, **caractérisé en ce qu'**au moins les première et deuxième roues (6B, 6C) s'étendent dans des plans distincts.

10. Mécanisme (1) selon la revendication 9, **caractérisé en ce que** les première, deuxième et troisième roues (6B, 6C, 6A) s'étendent chacune dans un plan distinct.

11. Mécanisme (1) selon la revendication 10, dans lequel la troisième roue (8) comporte ladite quatrième denture magnétique (27), **caractérisé en ce que** les première et deuxième roues (6B, 6C) s'étendent dans des plans sensiblement perpendiculaires, **en ce que** la troisième roue (6A) s'étend dans un plan disposé à sensiblement 45 degrés par rapport au plan dans lequel s'étend la première roue (6B) et au plan dans lequel s'étend la deuxième roue (6C) ; et **en ce que** chacun desdits premiers pôles magnétiques permanents (29) forme avec un deuxième pôle magnétique permanent correspondant (31) parmi lesdits deuxièmes pôles magnétiques permanents (31) un aimant bipolaire (26) présentant une aimantation axiale, les première, deuxième et troisième roues (6A, 6B, 6C) étant positionnées de sorte que le ou les aimants bipolaires (26) couplés à la première denture magnétique (10) sont simultanément couplés à la deuxième denture magnétique (12).

12. Mécanisme (1) selon la revendication 11, **caractérisé en ce que** la première roue et la deuxième roue (6B, 6C) comprennent chacune une jante formant une base circulaire continue pour respectivement la première denture magnétique (10) et la deuxième denture magnétique (12), cette jante étant constituée d'un matériau ferromagnétique doux de sorte à former une fermeture pour des chemins magnétiques respectivement desdits premiers flux magnétiques et desdits deuxièmes flux magnétiques.

## Patentansprüche

1. Mechanismus (1), Uhrwerk, umfassend ein magnetisches Getriebe (2), das eine erste Radscheibe (6B) und eine zweite Radscheibe (6C) mit jeweils einem ersten magnetischen Zahnkranz (10) und einem zweiten magnetischen Zahnkranz (12) umfasst, wobei die ersten und zweiten magnetischen Zahnkränze (10, 12) jeweils durch erste und zweite Zähne aus weichem ferromagnetischem Material gebildet sind; das magnetische Getriebe (2) umfasst ferner eine dritte Radscheibe (6A), die zwischen der ersten und der zweiten Radscheibe (6B, 6C) angeordnet ist und mit ersten permanentmagnetischen Polen (7; 29) ausgestattet ist, die die magnetisierten Zähne eines dritten magnetischen Zahnkranzes (8) bilden, wobei dieser Zahnkranz so konfiguriert ist, dass aus seinen Zähnen magnetische Flüsse mit alternierender Polarität austreten; die dritte Radscheibe (6A) und die erste Radscheibe (6B) sind so angeordnet, dass der dritte magnetische Zahnkranz (8) eine erste magnetische Kopplung mit dem ersten magnetischen Zahnkranz (10) bildet, wobei diese Kopplung durch die genannten ersten magnetischen Flüsse erfolgt, welche die Zähne des ersten magnetischen Zahnkranzes (10) vorübergehend in magnetische Anziehung versetzen, wenn sie sich vorübergehend in einer ersten magnetischen Kopplungszone mit dem dritten magnetischen Zahnkranz (8) befinden und jeweils von den ersten magnetischen Flüssen durchflossen werden; ferner sind die dritte Radscheibe (6A) und die zweite Radscheibe (6C) so angeordnet, dass entweder der dritte magnetische Zahnkranz (8) oder gegebenenfalls ein vierter magnetischer Zahnkranz (27), welcher von der dritten Radscheibe gebildet wird und aus zweiten permanentmagnetischen Polen (31) besteht, aus denen zweite magnetische Flüsse mit alternierender Polarität austreten, eine zweite magnetische Kopplung mit dem zweiten magnetischen Zahnkranz (12) erzeugt, wobei auch hier die genannten ersten bzw. zweiten magnetischen Flüsse die Zähne des zweiten magnetischen Zahnkranzes (12) vorübergehend magnetisch anziehend polarisieren, wenn sie sich in einer zweiten magnetischen Kopplungszone mit dem dritten oder gegebenenfalls mit dem vierten magnetischen Zahnkranz (27) befinden.

2. Mechanismus (1) gemäß Anspruch 1, **dadurch gekennzeichnet, dass** die dritte Radscheibe (6A) frei drehbar gelagert ist und so konfiguriert ist, dass sie ein von der ersten Radscheibe (6B), welche als antreibende Radscheibe des magnetischen Getriebes (2) fungiert, empfangenes Drehmoment an die zweite Radscheibe (6C) überträgt, wobei die zweite Radscheibe (6C) durch die erste Radscheibe (6B) über die dritte Radscheibe (6A) angetrieben wird, um eine Funktion des Mechanismus (1) auszuführen oder das Drehmoment im Mechanismus (1) weiterzuleiten.

3. Mechanismus (1) gemäß Anspruch 1 oder 2, wobei die erste magnetische Verzahnung (10) N1 Zähne, die zweite magnetische Verzahnung (12) N2 Zähne und die dritte magnetische Verzahnung (8) N3 Zähne aufweist; **dadurch gekennzeichnet, dass** N3 eine gerade Zahl zwischen vier und einschließlich zehn ist und dass sowohl das Verhältnis N1 zu N3 als auch das Verhältnis N2 zu N3 jeweils größer oder gleich zwei sind, vorzugsweise größer als oder gleich drei.

4. Mechanismus (1) gemäß einem der vorhergehenden Ansprüche, **dadurch gekennzeichnet, dass** die dritte Radscheibe (6A) einen zentralen Abschnitt (9; 28) aus ferromagnetischem Material aufweist, an dessen Umfang die besagten permanentmagnetischen Pole (7) paarweise mit jeweils komplementären Magnetpolen angeordnet sind, wodurch bipolare Magnete mit radialer Magnetisierung gebildet werden, die jeweils die magnetisierten Zähne des dritten magnetischen Zahnkranzes definieren.

5. Mechanismus (1) nach einem der vorhergehenden Ansprüche, **dadurch gekennzeichnet, dass** die erste und/oder die zweite Radscheibe (6B, 6C) eine Felge aufweist, die eine durchgehende kreisförmige Basis für den jeweiligen magnetischen Zahnkranz (10, 12) bildet, wobei diese Felge aus weichem ferromagnetischem Material besteht, um einen Abschluss für die magnetischen Flusswege der genannten magnetischen Flüsse zu bilden.

6. Mechanismus (1) nach einem der vorhergehenden Ansprüche, **dadurch gekennzeichnet, dass** er außerdem eine Rücklaufsperre (20) umfasst, die mechanisch mit der zweiten Radscheibe (6C) gekoppelt ist.

7. Mechanismus (1) nach einem der vorhergehenden Ansprüche, **dadurch gekennzeichnet, dass** mindestens die erste und zweite Radscheibe (6B, 6C) in einer gemeinsamen Ebene angeordnet sind.

8. Mechanismus (1) nach Anspruch 7, **dadurch gekennzeichnet, dass** die erste, zweite und dritte Radscheibe (6B, 6C, 6A) in einer gemeinsamen Ebene angeordnet sind.

9. Mechanismus (1) nach einem der Ansprüche 1 bis 6, **dadurch gekennzeichnet, dass** sich zumindest die erste und zweite Radscheibe (6B, 6C) in unterschiedlichen Ebenen erstrecken.

10. Mechanismus (1) nach Anspruch 9, **dadurch gekennzeichnet, dass** die erste, zweite und dritte Radscheibe (6B, 6C, 6A) jeweils in einer eigenen Ebene angeordnet sind.

11. Mechanismus (1) gemäß Anspruch 10, wobei das dritte Rad (8) die besagte vierte magnetische Verzahnung (27) aufweist, **dadurch gekennzeichnet, dass** sich die erste Radscheibe (6B) und die zweite Radscheibe (6C) in im Wesentlichen senkrechten Ebenen erstrecken, dass sich die dritte Radscheibe (6A) in einer Ebene erstreckt, die etwa 45 Grad zu der Ebene, in der sich die erste Radscheibe (6B) erstreckt, und der Ebene, in der sich die zweite Radscheibe (6C) erstreckt, geneigt ist; und dass jeder der besagten ersten permanentmagnetischen Pole (29) zusammen mit einem entsprechenden zweiten permanentmagnetischen Pol (31) unter den besagten zweiten permanentmagnetischen Polen (31) einen bipolaren Magneten (26) mit axialer Magnetisierung bildet, wobei die erste Radscheibe, die zweite Radscheibe und die dritte Radscheibe (6A, 6B, 6C) so angeordnet sind, dass die mit der ersten magnetischen Verzahnung (10) gekoppelten bipolaren Magnete (26) gleichzeitig mit der zweiten magnetischen Verzahnung (12) gekoppelt sind.

12. Mechanismus (1) nach Anspruch 11, **dadurch gekennzeichnet, dass** die erste Radscheibe und die zweite Radscheibe (6B, 6C) jeweils einen Kranz aufweisen, der eine durchgehende kreisförmige Basis für die erste magnetische Verzahnung (10) bzw. die zweite magnetische Verzahnung (12) bildet, wobei dieser Kranz aus einem weichmagnetischen Material besteht, um jeweils einen magnetischen Rückschluss für die magnetischen Wege der genannten ersten bzw. zweiten Magnetflüsse zu bilden.

## Claims

1. Mechanism (1), of timepiece type, comprising a magnetic gear (2) including a first wheel (6B) and a second wheel (6C) provided with a first magnetic toothing (10) and a second magnetic toothing (12) respectively; wherein the first and second magnetic toothings (10, 12) are respectively formed by first and second teeth made of a soft ferromagnetic material; and in that the magnetic gear (2) further comprises a third wheel (6A) arranged between the first and second wheels (6B, 6C) and provided with first permanent magnetic poles (7; 29) forming the magnetised teeth of a third magnetic toothing (8) comprised in this third wheel (6A) and which is configured in such a way that first magnetic fluxes, having alternating polarities, emerge respectively from these magnetised teeth, the third wheel (6A) and the first wheel (6B) being arranged in such a way that the third magnetic toothing (8) has a first magnetic coupling with the first magnetic toothing (10) generated by said first magnetic fluxes which momentarily polarise, in magnetic attraction, teeth of the first magnetic toothing (10), momentarily located in a first magnetic coupling zone with the third magnetic toothing (8) and thus through which first magnetic fluxes from among said first magnetic fluxes respectively flow, the third wheel (6A) and the second wheel (6C) being arranged in such a way that the third magnetic toothing (8) or, where applicable, a fourth magnetic toothing (27), which is comprised by the third wheel and which is formed by second permanent magnetic poles (31) from which second magnetic fluxes emerge with alternating polarities, has a second magnetic coupling with the second magnetic toothing (12), which is generated by said first magnetic fluxes, or respectively by said second magnetic fluxes, which momentarily polarise, in magnetic attraction, teeth of the second magnetic toothing (12) which are momentarily located in a second magnetic coupling zone with the third magnetic toothing (8) or, where applicable, with the fourth magnetic toothing (27) and thus through which first magnetic fluxes from among said first magnetic fluxes flow, or respectively though which second magnetic fluxes from among said second magnetic fluxes flow.

2. Mechanism (1) according to claim 1, **characterised in that** the third wheel (6A) is mounted such that it can rotate freely, this third wheel (6A) being configured to transmit a torque received from the first wheel (6B), which is a drive wheel in the magnetic gear (2), to the second wheel (6C) which is driven by the first wheel (6B) via the third wheel (6A) so as to carry out a function of the mechanism or to transmit within the mechanism (1) a torque received from the first wheel (6B).

3. Mechanism (1) according to claim 1 or 2, wherein the first magnetic toothing (10) comprises N1 teeth, the second magnetic toothing (12) comprises N2 teeth, and the third magnetic toothing (8) comprises N3 teeth; **characterised in that** the number N3 is an even number between four and ten, inclusive; and **in that** the ratio between the number N1 and the number N3, and the ratio between the number N2 and the number N3, are each greater than or equal to two, preferably greater than or equal to three.

4. Mechanism (1) according to any one of the preceding claims, **characterised in that** the third wheel (6A) has a central part (9; 28) made of a ferromagnetic material, on the periphery whereof its said permanent magnetic poles (7) are arranged in pairs respectively with as many complementary magnetic poles, thus forming bipolar magnets having radial magnetisation and respectively defining the magnetised teeth of the third magnetic toothing.

5. Mechanism (1) according to any one of the preceding claims, **characterised in that** the first wheel and/or the second wheel (6B, 6C) comprise/comprises a rim forming a continuous circular base for the respective magnetic toothing (10, 12), this rim being made of a soft ferromagnetic material so as to form a closure closing magnetic paths of said magnetic fluxes.

6. Mechanism (1) according to any one of the preceding claims, **characterised in that** it further includes a non-return device (20) mechanically coupled to the second wheel (6C).

7. Mechanism (1) according to any one of the preceding claims, **characterised in that** at least the first and second wheels (6B, 6C) are coplanar.

8. Mechanism (1) according to claim 7, **characterised in that** the first, second and third wheels (6B, 6C, 6A) are coplanar.

9. Mechanism (1) according to any one of claims 1 to 6, **characterised in that** at least the first and second wheels (6B, 6C) extend in separate planes.

10. Mechanism (1) according to claim 9, **characterised in that** each of the first, second and third wheels (6B, 6C, 6A) extend in a separate plane.

11. Mechanism (1) according to claim 10, wherein the third wheel (8) includes said fourth magnetic toothing (27), **characterised in that** the first and second wheels (6B, 6C) extend in substantially perpendicular planes, **in that** the third wheel (6A) extends in a plane disposed at substantially 45 degrees to the plane in which the first wheel (6B) extends and to the plane in which the second wheel (6C) extends; and **in that** each of said first permanent magnetic poles (29) forms, with a corresponding second permanent magnetic pole (31) from among said second permanent magnetic poles (31), a bipolar magnet (26) having axial magnetisation, the first, second and third wheels (6A, 6B, 6C) being positioned such that the one or more bipolar magnets (26) coupled to the first magnetic toothing (10) are simultaneously coupled to the second magnetic toothing (12).

12. Mechanism (1) according to claim 11, **characterised in that** the first wheel and the second wheel (6B, 6C) each comprise a rim forming a continuous circular base respectively for the first magnetic toothing (10) and the second magnetic toothing (12), this rim being made of a soft ferromagnetic material so as to form a closure closing magnetic paths respectively of said first magnetic fluxes and of said second magnetic fluxes.
